# EUROPEAN PATENT SPECIFICATION

(11) **EP 2 746 622 B1**
(45) Date of publication and mention of the grant of the patent: **28.03.2018**
(21) Application number: 12198554.3
(22) Date of filing: 20.12.2012
(51) Int. Cl.: F16J 1/16, F16J 1/18

(54) **Emergency guiding element for piston pin**
Notführungselement für einen Kolbenbolzen
Élément de guidage d'urgence pour axe de piston

(43) Date of publication of application: 25.06.2014
(73) Proprietor: Caterpillar Energy Solutions GmbH, 68167 Mannheim (DE)
(72) Inventor: Stellwagen, Karl, 67227 Frankenthal (DE)
(74) Representative: BRP Renaud & Partner mbB Rechtsanwälte Patentanwälte Steuerberater

(56) References cited:
- EP-A2- 1 227 269
- DE-A1- 3 642 525
- DE-A1-102006 035 178
- US-A- 4 011 797
- US-A- 4 640 641
- US-A- 5 289 758

## Description

### Technical Field

The present disclosure generally relates to internal combustion engines, and more particularly to piston pins configured to connect connecting rods and pistons of an internal combustion engine.

### Background

A known technique for connecting a piston to an associated connecting rod are piston pin. Said piston pin allow delivery of power between a rotating crankshaft and a reciprocating piston. The piston, the piston pin, the connecting rod and the crankshaft together facilitate conversion in both directions between linear motion of the piston and rotational movement of the crankshaft.

For example, DE 10 2006 035 178 A1 discloses a piston connected to a connecting rod via a piston pin. A sealing cap is attached to each end of the piston pin. Each sealing cap may provide a gas-tight as it is in constant contact with the inner cylinder wall to prevent fuel from flowing into the piston pin.

In another example, EP 1 227 269 A2 discloses a piston connected to a connecting rod via a piston pin. The piston pin may comprise two end caps for preventing end play of the piston pin as an end cap may come into contact with a combustion cylinder during operation of the engine.

US 4 011 797 A discloses a piston for a heat engine having a chamber. The chamber can be of annular shape.

Further examples of end caps for piston pins are disclosed in DE 36 42 525 A1, US 4,640,641 A, US 5,289,758 A, GB 1 467 319 A, US 3,136,306 A, DE 1 676 810 U, FR 639 952 A, DE 430 514 C.

The present invention is directed, at least in part, to improving or overcoming one or more aspects of prior systems.

### Summary of the Invention

The present invention provides a piston assembly according to claim 1. Further developments are given in the dependent claims.

In one aspect of the present disclosure, an emergency guiding element may be configured to be attached to an end of a piston pin connecting a connecting rod to a piston arranged within a cylinder having an inner cylinder wall. The emergency guiding element may be integrally formed with an emergency guiding outer wall facing the inner cylinder wall. The emergency guiding outer wall may be configured to contact the inner cylinder wall only in case of a demolition of the piston

In another aspect of the present disclosure, a piston pin assembly for connecting a connecting rod to a piston reciprocatingly arranged within a cylinder, the piston pin assembly may comprise a piston pin having a first end and a second end opposing the first end. The piston pin assembly may further comprise a first emergency guiding element and attached to the first end of the piston pin, and a second emergency guiding element and attached to the second end of the piston pin. A first emergency guiding outer wall of the first emergency guiding element and a second emergency guiding outer wall of the second emergency guiding element may be configured to contact the inner cylinder wall only in case of a demolition of the piston.

In yet another aspect of the present disclosure, a piston assembly may be configured to be arranged in a cylinder. The piston assembly may comprise a piston configured to be reciprocatingly arranged within the cylinder, a connecting rod, and a piston pin assembly. A piston pin of the piston pin assembly may connect the connecting rod and the piston. The piston assembly may further comprise a first circlip and a second circlip. The first circlip and the second circlip may be arranged to axially fix the piston pin in the piston.

Other features and aspects of this disclosure will be apparent from the following description and the accompanying drawings.

### Brief Description of the Drawings

Fig. 1 shows a sectional view of a piston assembly, according to the invention, arranged within a cylinder of an internal combustion engine;
Fig. 2 shows a sectional view of an emergency guiding element;
Fig. 3 shows a sectional view of a piston pin assembly; and
Fig. 4 shows a sectional view of another piston pin assembly.

### Detailed Description

The following is a detailed description of examples. The examples are not intended to be, and should not be considered as, a limiting description of the scope of patent protection. Rather, the scope of patent protection shall be defined by the appended claims.

The present disclosure may be based in part on the realization that in case of a piston demolition, a connecting rod may cause considerable damage to the cylinder liner as the connecting rod may reciprocate within the cylinder in an unguided state for several times within before the engine stops.

Accordingly, an emergency guiding element is disclosed which is configured to be attached to an end of a piston pin. The emergency guiding element may facilitate guidance of the connecting rod only in case of a piston demolition.

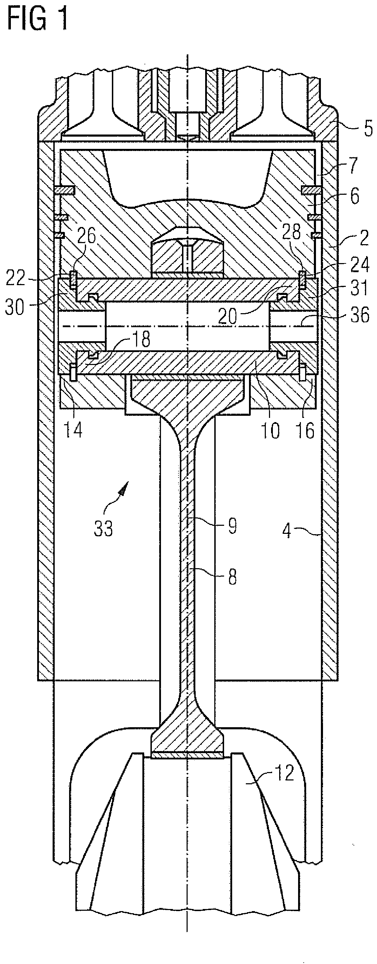

Referring now to Fig. 1, a piston arranged in a cylinder of an internal combustion engine is shown.

A cylinder 2 of an internal combustion engine (not shown) extends along a central axis 9 and includes an inner cylinder wall 4. Cylinder 2 is covered by a cylinder head 5, which accommodates various components such as inlet valves(s) and port(s), outlet valve(s) and port(s) and a spark plug.

A piston 6 is reciprocatingly arranged along central axis 9 within cylinder 2. Piston 6 is connected via a piston pin 10 to a connecting rod 8 which in turn is connected to a crankshaft 12. Piston 6 comprises a piston skirt 7 facing inner cylinder wall 4.

Piston pin 10 is disposed in piston bosses 14 and 16. Specifically, a first end 18 of piston pin 10 is arranged in a first piston boss 14, whereas a second end 20 of piston pin 10 opposing first end 18 is arranged in a second piston boss 16. Axially fixation of piston pin 10 is achieved by first circlip 22 arranged in a circlip groove 26 in first piston boss 14, and second circlip 24 arranged in a circlip groove 28 in second piston boss 16. Thus, piston pin 10 is axially secured between first circlip 22 and second circlip 24. In the shown configuration, piston pin 10 is formed as hollow piston pin.

On each end 18, 20 of piston pin 10, emergency guiding elements 30, 31 are attached to piston pin 10. In the shown configuration, a snap-fit mechanism secures emergency guiding elements 30, 31 to respective ends 18, 20 of piston pin 10.

Piston 6, connecting rod 8, piston pin 10, emergency guiding elements 30, 31, and circlips 22, 24 together form a piston assembly 33.

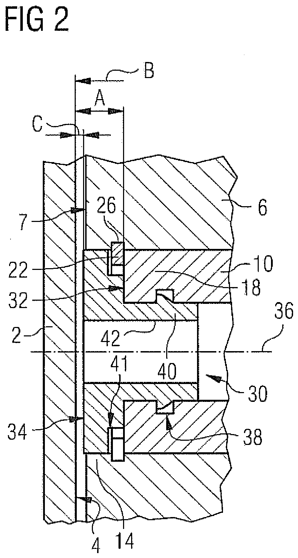

Fig. 2 gives a more detailed view of first emergency guiding element 30 attached to piston pin 10 at first end 18 in a sectional view. However, the hereinafter given description similarly relates to second emergency guiding element 31 attached to second end 20 of piston pin 10.

Due to structural limitations caused by the axial fixation of piston pin 10 by circlip 22 in circlip groove 26, first end 18 of piston pin 10 is spaced apart with its piston pin outer wall 32 from inner cylinder wall 4 in a distance A. In practice, distance A may be typically within a range from 5 % to 10 % of an inner cylinder diameter B.

On the contrary, emergency guiding element 30 is spaced apart with an integrally formed emergency guiding outer wall 34 from inner cylinder wall 4 in a distance C. Due to the attachment of emergency guiding element 30 onto end 18 of piston pin 10, distance C between inner cylinder wall 4 and emergency guiding outer wall 34 is naturally less than distance A between inner cylinder wall 4 and piston pin outer wall 32.

Emergency guiding element 30 is configured to set distance C between emergency guiding outer wall 34 and inner cylinder wall 4 within a range from 0.1 % to 5 %, preferably within a range from 0.1 % to 4.5 %, of inner cylinder diameter B. Therefore, emergency guiding element 30 may extend more or less along a piston pin axis 36, said extend depending on several boundary conditions defined by, for example, position of circlip groove 26, length of piston pin 10, and diameter of piston skirt 7.

Although shown in Fig. 2, emergency guiding element 30 may not necessarily extend beyond piston skirt 7. That is, depending on a desired distance C within a range from 0.1 % to 5 %, for example 1 %, of an inner cylinder diameter B and a distance between piston skirt 7 and inner cylinder wall 4 depending on the specific piston used, emergency guiding outer wall 34 may extend beyond piston skirt 7, may extend until piston skirt 7, or may extend within the confines of piston skirt 7.

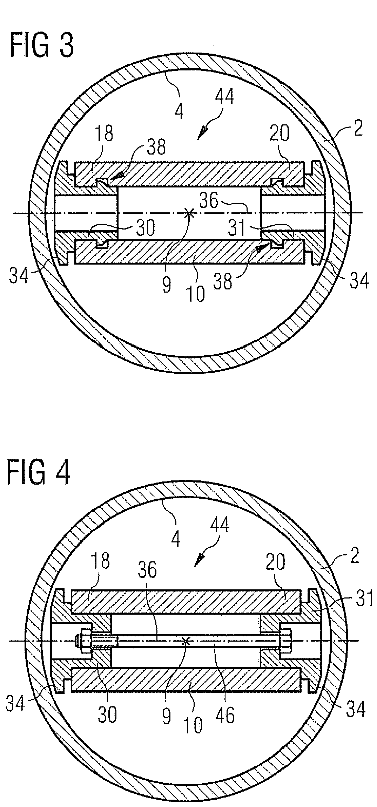

Emergency guiding element 30 is attached to piston pin 10 via a snap-fit mechanism 38 such that emergency guiding element 30 is axially fixed with respect to piston pin axis 36. In the shown configuration, snap-fit mechanism 38 is formed by a snap-in hook on an outer circumferential wall of a shaft section 40 of emergency guiding element 30, and a corresponding groove in an inner circumferential wall of piston pin 10. However, a vice versa arrangement of snap-in hook and corresponding groove may be also possible. In anticipation of Fig. 4, an alternate fitting mechanism is shown. However, one skilled in the art will recognize that various other fitting mechanism exist that may be suitable to secure emergency guiding element 30 to piston pin 10.

To facilitate arrangement of circlip 22, emergency guiding element 30 comprises a circlip recess section 41 which is configured to provide an accommodation space for circlip 22 arranged in circlip groove 26. Circlip recess section 41 extends from shaft section 40 towards emergency guiding outer wall 34. Additionally or alternatively, emergency guiding element 30 may have an outer diameter less than an inner diameter of circlip 22 such that emergency guiding element 30 may be attached to piston pin 10 before circlip 22 is arranged in circlip groove 26. For example, emergency guiding element 30 may be attached to piston pin 10 before inserting piston pin 10 into piston bosses 14 and 16.

In the shown embodiment, emergency guiding element 30 comprises a bore 42 extending from the emergency guiding outer wall 34 through the emergency guiding element 30.

Emergency guiding element 30 may be made of the same material as piston 6, and/or piston pin 10, for example, aluminum or steel. Alternatively, material of emergency guiding element 30 may be chosen from a group of materials providing good sliding properties such as brass, alloys, and polyamide. In some embodiments, emergency guiding outer wall 34 may be coated with a sliding coating, for example, a polyamideimide based coating with added lubricant and hard particle enhancements.

Turning to Fig. 3, a sectional view of a piston pin assembly 44 is shown. Sectional view of Fig. 3 lies in a plane of piston pin axis 36 and perpendicular to central axis 9. For purpose of clarity, only piston pin assembly 44 and cylinder 2 with inner cylinder wall 4 are shown.

A piston pin assembly 44 comprises piston pin 10 with first emergency guiding element 30 attached to first end 18 of piston pin 10, and second emergency guiding element 31 attached to a second end 20 of piston pin 10 opposing the first end 18. Specifically, first emergency guiding element 30 and second emergency guiding element 31 may be equally formed.

As can be seen, emergency guiding outer wall 34 has a curved shape. Some sections of said curved shape may be adapted to a shape of inner cylinder wall 4. For example, emergency guiding outer wall 34 may be at least partially shaped as a spherical cap, a spherical segment, and/or a cylindrical surface segment.

Referring now to Fig. 4, a sectional view of another piston pin assembly 44 is shown to illustrate an alternate fitting mechanism for emergency guiding elements 30, 31. Similar to Fig. 3, sectional view of Fig. 4 lies in a plane of piston pin axis 36 and perpendicular to central axis 9, and for purpose of clarity, only piston pin assembly 44 and cylinder 2 with inner cylinder wall 4 are shown.

Contrary to the snap-fit mechanism 38 shown in Figs. 1 to 3, the piston pin assembly 44 shown in Fig. 4 comprises an screw thread mechanism 46. Screw thread mechanism 46 is formed by a screw and a thread facilitating axial fixation of emergency guiding elements 30, 31 along piston pin axis 36. One skilled in the art will appreciate that alternate configurations of screw thread mechanisms may be applicable, for example, shaft section 40 of emergency guiding element 34 may comprise an external thread configured to fit into an internal thread located on an inner circumferential wall of piston pin 10. However, it is contemplated that further applicable fitting mechanisms may exist, one of which is shrink fitting from the group of press fittings. Press fit (also referred to as friction fit) mechanism as used herein means fastening between two parts which is achieved by friction after the parts are pushed together.

### Industrial Applicability

In the following, operation and functionality of emergency guiding elements 30 is described with reference to Figs. 1 and 2.

During operation of the internal combustion engine, piston 6 reciprocates within cylinder 2. In doing so, piston pin 10 is axially secured along piston pin axis 36 due to the presence of circlip 22 and 24. As emergency guiding elements 30 and 31 are configured set a minimum distance C between emergency guiding outer wall 34 and inner cylinder wall 4 within a range from 0.1 % to 5 % of the inner cylinder diameter B, emergency guiding elements 30 and 31 do not come into contact with inner cylinder wall 4.

However, in the case of a piston demolition which constitutes in piston 6 braking away from piston pin 10, emergency guiding outer wall 34 of emergency guiding element 30 comes into contact with inner cylinder wall 4. Thus, emergency guiding elements 30, 31 are configured to contact inner cylinder wall 4 with emergency guiding outer wall 34 only in case of a demolition of piston 6 as piston pin 10 is axially secured along piston axis 36 during operation of the internal combustion engine.

Said contact between emergency guiding outer wall 34 and inner cylinder wall 4 in case of said piston demolition facilitates an emergency guidance of connecting rod 8 until the internal combustion engine finally stops. The emergency guidance of connecting rod 8 may reduce damage of connecting rod 8 reciprocating in cylinder 2 after demolition of piston 6.

Furthermore, a tilting tendency of piston pin 6 in case of a demolition of the piston 6 may be reduced by providing emergency guiding outer wall 34 with a height. Height as used herein means an extend of contact face 34 along an axis parallel to central axis 9 (for example, as can be seen in Fig. 2). Thereby, more than one potential emergency contact point on emergency guiding outer wall 34 may be provided. In other words, emergency guiding outer wall 34 may be configured to provide two emergency guiding contact points to contact inner cylinder wall 4 only in case of a demolition of piston 6. The two emergency guiding contact points being spaced apart from each other in a direction of central axis 9 of cylinder 2. This may be achieved, for example, by forming emergency guiding outer wall 34 as a cylindrical surface segment (which may have an annular shape due to the presence of bore 42). A reduced tilting tendency may further lead to an improved emergency guidance of connecting rod 8.

On the contrary, in prior art solutions, a piston pin may be spaced apart with its outer wall at each end from an inner cylinder wall in a distance being typically within a range from 5 % to 10 % of an inner cylinder diameter, or greater, as already described. If a piston demolition occurs in such configurations, the clearance between the outer wall of the piston pin and the inner cylinder wall is too large resulting in an unguided reciprocation of a connecting rod attached to the piston pin for the next few strokes of the internal combustion engine until the engine finally stops. The unguided connecting rod may cause considerable damage to the cylinder wall, the cylinder as well as the entire engine, which may lead to a complete engine write-off.

Accordingly, emergency guiding elements 30 and 31 may reduce damages occurring after a piston demolition, which may allow a repair of the piston demolition (for example, by replacement) in a cost effective manner as a complete engine write-off due to an unguided connecting rod considerably increasing the damage may be prevented.

As emergency guiding elements 30 and 31 are not in contact with inner cylinder wall 4 during normal operation of the internal combustion engine, no friction between emergency guiding elements 30 and 31 and inner cylinder wall 4 occurs, which could reduce efficiency of the internal combustion engine.

Generally, emergency guiding elements 30, 31 may be applicable in internal combustion engines including a piston connected to a connecting rod via a piston pin. Said internal combustion engine may include features not shown, such as air systems, cooling systems, peripheries, drivetrain components, etc. Furthermore, internal combustion engine may be of any size, with any number of cylinders, and in any configuration (e.g., "V," in-line, radial, etc.). Additionally, internal combustion engine may be used to power any machine or other device, including, but not limited to, locomotive applications, on-highway trucks or vehicles, off-highway trucks or machines, earth moving equipment, generators, aerospace applications, marine applications, offshore applications, pumps, stationary equipment, or other engine powered applications.

Furthermore, emergency guiding elements 30, 31 may be applicable in any piston machine including, but not limited to, piston compressors and piston pumps, to reduce damages caused by a piston demolition.

Although the preferred embodiments of this invention have been described herein, improvements and modifications may be incorporated without departing from the scope of the following claims.

## Claims

1. A piston assembly (33) configured to be arranged in a cylinder (2) with an inner cylinder wall (4), comprising:
a piston (6) configured to be reciprocatingly arranged within the cylinder (2);
a connecting rod (8);
a first circlip (22);
a second circlip (24); and
a piston pin assembly (44) including
a piston pin (10) for connecting the connecting rod (8) and the piston (6), the piston pin (10) having a first end (18) and a second end (20) opposing the first end (18),
a first emergency guiding element (30) being attached to the first end (18) of the piston pin (10), the first emergency guiding element (30) being integrally formed with a first emergency guiding outer wall (34) for facing the inner cylinder wall (4) and for contacting the inner cylinder wall (4) only in case of a demolition of the piston (6), and
a second emergency guiding element (31) being attached to the second end (20) of the piston pin (10), the second emergency guiding element (31) being integrally formed with a second emergency guiding outer wall (34) for facing the inner cylinder wall (4) and for contacting the inner cylinder wall (4) only in case of a demolition of the piston (6), the first emergency guiding element (30) and the second emergency guiding element (31) including
a bore (42) extending from the emergency guiding outer wall (34) through the guiding element (30, 31) and
a circlip recess section (41) configured to provide an accommodation space for the first circlip (22) and the second circlip (24) for axially fixing the piston pin (10) in the piston (6).

2. The piston assembly (44) of claim 1, wherein the piston pin (10) is formed as a hollow piston pin, and the first emergency guiding element (30) and the second emergency guiding element (31) are attached to each other via a screw thread mechanism (46) extending through the hollow piston pin (10).

3. The piston assembly (44) of claims 1 or 2, wherein the emergency guiding outer wall (34) has a curved shape.

4. The piston assembly (44) of any one of the preceding claims, wherein the cylinder (2) extends along a central axis (9), and the emergency guiding outer wall (34) is configured to provide two emergency guiding contact points for contacting the inner cylinder wall (4) only in case of a demolition of the piston (6), the two emergency guiding contact points being spaced apart from each other in a direction of the central axis (9).

5. The piston assembly (44) of any one of the preceding claims, wherein the emergency guiding outer wall (34) is at least partially shaped as a spherical cap, a spherical segment, and/or a cylindrical surface segment.

6. The piston assembly (44) of any one of the preceding claims, wherein the emergency guiding element (30, 31) is configured to attach to the end (18, 20) of the piston pin (10) by a snap-fit mechanism (38).

7. The piston assembly (44) of any one of the preceding claims, wherein the emergency guiding element (30, 31) is configured to attach to the end (18, 20) of the piston pin (10) by a screw thread mechanism (46).

8. The piston assembly (44) of any one of the preceding claims, wherein the emergency guiding element (30, 31) is configured to attach to the end (18, 20) of the piston pin (10) by a press fit mechanism.

9. The piston assembly (44) of any one of the preceding claims, wherein the emergency guiding element (30, 31) is made of brass, alloy, steel, aluminum, or polyamide; and/or
wherein the emergency guiding outer wall (34) is coated with a sliding coating.

10. A cylinder and piston assembly of an internal combustion engine, the cylinder and piston assembly comprising:
a cylinder (2) having an inner cylinder diameter (B) and an inner cylinder wall (4); and
a piston assembly (44) according to any one of the preceding claims, wherein
the first emergency guiding element (30) is configured to set a minimum distance (C) between the first emergency guiding outer wall (34) and the inner cylinder wall (4) within a range from 0.1 % to 5 % of the inner cylinder diameter (B); and
the second emergency guiding element (30) is configured to set a minimum distance (C) between the second emergency guiding outer wall (34) and the inner cylinder wall (4) within a range from 0.1 % to 5 % of the inner cylinder diameter (B).

## Patentansprüche

1. Kolbeneinheit (33), die konfiguriert ist, um in einem Zylinder (2) mit einer inneren Zylinderwand (4) angeordnet zu sein, umfassend:
einen Kolben (6), der konfiguriert ist, um reziprok innerhalb des Zylinders (2) angeordnet zu sein;
eine Verbindungsstange (8),
einen ersten Sicherungsring (22),
einen zweiten Sicherungsring (24); und
eine Kolbenbolzeneinheit (44), die einschließt
einen Kolbenbolzen (10) zur Verbindung der Verbindungsstange (8) und des Kolbens (6), wobei der Kolbenbolzen (10) ein erstes Ende (18) und ein zweites Ende (20) aufweist, das dem ersten Ende (18) gegenüberliegt,
ein erstes Notführungselement (30), das an dem ersten Ende (18) des Kolbenbolzens (10) befestigt ist, wobei das erste Notführungselement (30) einstückig mit einer ersten Notführungs-Außenwand (34) gebildet ist, um der inneren Zylinderwand (4) gegenüber zu liegen, und um mit der inneren Zylinderwand (4) nur für den Fall einer Zerstörung des Kolbens (6) in Kontakt zu kommen, und
ein zweites Notführungselement (31), das an dem zweiten Ende (20) des Kolbenbolzens (10) befestigt ist, wobei das zweite Notführungselement (31) mit einer zweiten Notführungs-Außenwand (34) gebildet ist, um der inneren Zylinderwand (4) gegenüber zu liegen, und um mit der inneren Zylinderwand (4) nur für den Fall einer Zerstörung des Kolbens (6) in Kontakt zu kommen, wobei das erste Notführungselement (30) und das zweite Notführungselement (31) einschließen
eine Bohrung (42), die sich von der Notführungs-Außenwand (34) durch das Führungselement (30, 31) erstreckt, und
einen Sicherungsring-Aussparungsabschnitt (41), der konfiguriert ist, um einen Aufnahmeraum für den ersten Sicherungsring (22) und den zweiten Sicherungsring (24) bereitzustellen, um den Kolbenbolzen (10) axial im Kolben (6) zu fixieren.

2. Kolbeneinheit (44) nach Anspruch 1, wobei der Kolbenbolzen (10) als ein hohler Kolbenbolzen gebildet ist und das erste Notführungselement (30) und das zweite Notführungselement (31) aneinander mit Hilfe eines Schrauben-Gewinde-Mechanismus (46) befestigt sind, der sich durch den hohlen Kolbenbolzen (10) erstreckt.

3. Kolbeneinheit (44) nach Anspruch 1 oder 2, wobei die Notführungs-Außenwand (34) eine gekrümmte Form aufweist.

4. Kolbeneinheit (44) nach einem der vorstehenden Ansprüche, wobei sich der Zylinder (2) entlang einer zentralen Achse (9) erstreckt und die Notführungs-Außenwand (34) konfiguriert ist, um zwei Notführungs-Kontaktpunkte bereitzustellen, um mit der inneren Zylinderwand (4) nur für den Fall einer Zerstörung des Kolbens (6) in Kontakt zu kommen, wobei die zwei Notführungs-Kontaktpunkte voneinander in einer Richtung der zentralen Achse (9) beabstandet sind.

5. Kolbeneinheit (44) nach einem der vorstehenden Ansprüche, wobei die Notführungs-Außenwand (34) mindestens teilweise als eine sphärische Kappe, ein sphärisches Segment und/oder ein zylindrisches Oberflächensegment gebildet ist.

6. Kolbeneinheit (44) nach einem der vorstehenden Ansprüche, wobei das Notführungselement (30, 31) konfiguriert ist, um an dem Ende (18, 20) des Kolbenbolzens (10) durch einen Schnappbefestigungsmechanismus (38) befestigt zu sein.

7. Kolbeneinheit (44) nach einem der vorstehenden Ansprüche, wobei das Notführungselement (30; 31) konfiguriert ist, um an dem Ende (18, 20) des Kolbenbolzens (10) durch einen Schrauben-Gewinde-Mechanismus (46) befestigt zu sein.

8. Kolbeneinheit (44) nach einem der vorstehenden Ansprüche, wobei das Notführungselement, (30; 31) konfiguriert ist, um an dem Ende (18, 20) des Kolbenbolzens (10) durch einen Presspassmechanismus befestigt zu sein.

9. Kolbeneinheit (44) nach einem der vorstehenden Ansprüche, wobei das Notführungselement (30, 31) aus Messing, Legierung, Stahl, Aluminium oder Polyamid hergestellt ist; und/oder
wobei die Notführungs-Außenwand (34) mit einer Gleitbeschichtung beschichtet ist.

10. Zylinder- und Kolbeneinheit eines Verbrennungsmotors, wobei die Zylinder- und Kolbeneinheit umfasst:
einen Zylinder (2), der einen inneren Zylinderdurchmesser (B) und eine innere Zylinderwand (4) aufweist; und
eine Kolbeneinheit (44) nach einem der vorstehenden Ansprüche, wobei
das erste Notführungselement, (30) konfiguriert ist, um einen minimalen Abstand (C) zwischen der ersten Notführungs-Außenwand (34) und der inneren Zylinderwand (4) innerhalb eines Bereichs von 0,1 % bis 5% des inneren Zylinderdurchmessers (B) festzusetzen; und
das zweite Notführungselement (30) konfiguriert ist, um einen minimalen Abstand (C) zwischen der zweiten Notführungs-Außenwand (34) und der inneren Zylinderwand (4) innerhalb eines Bereichs von 0,1% bis 5% des inneren Zylinderdurchmessers (B) festzusetzen.

## Revendications

1. Ensemble de piston (33) configuré pour être agencé dans un cylindre (2) avec une paroi de cylindre interne (4), comprenant :
un piston (6) configuré pour être agencé de manière à pouvoir effectuer un mouvement de va-et-vient dans le cylindre (2) ;
une bielle (8) ;
un premier circlip (22) ;
un second circlip (24) ; et
un ensemble d'axe de piston (44) incluant :
un axe de piston (10) pour raccorder la bielle (8) et le piston (6), l'axe de piston (10) ayant une première extrémité (18) et une seconde extrémité (20) opposée à la première extrémité (18),
un premier élément de guidage d'urgence (30) étant fixé à la première extrémité (18) de l'axe de piston (10), le premier élément de guidage d'urgence (30) étant formé intégralement avec une première paroi externe de guidage d'urgence (34) pour se trouver en regard de la paroi de cylindre interne (4) et venir en contact avec la paroi de cylindre interne (4) uniquement dans le cas d'une destruction du piston (6), et
un second élément de guidage d'urgence (31) étant fixé à la seconde extrémité (20) de l'axe de piston (10), le second élément de guidage d'urgence (31) étant formé intégralement avec une seconde paroi externe de guidage d'urgence (34) pour se trouver en regard de la paroi de cylindre interne (4) et venir en contact avec la paroi de cylindre interne (4) uniquement dans le cas d'une destruction du piston (6), le premier élément de guidage d'urgence (30) et le second élément de guidage d'urgence (31) incluant :
un alésage (42) s'étendant de la paroi externe de guidage d'urgence (34) à travers l'élément de guidage (30, 31) et
une section d'évidement de circlips (41) configurés pour fournir un espace de réception pour le premier circlip (22) et le second circlip (24) afin de fixer axialement l'axe de piston (10) dans le piston (6).

2. Ensemble de piston (44) selon la revendication 1, dans lequel l'axe de piston (10) se présente sous la forme d'un axe de piston creux et le premier élément de guidage d'urgence (30) et le second élément de guidage d'urgence (31) sont fixés l'un à l'autre via un mécanisme à filetage (46) s'étendant à travers l'axe de piston creux (10).

3. Ensemble de piston (44) selon les revendications 1 ou 2, dans lequel la paroi externe de guidage d'urgence (34) a une forme incurvée.

4. Ensemble de piston (44) selon l'une quelconque des revendications précédentes, dans lequel le cylindre (2) s'étend le long d'un axe central (9) et la paroi externe de guidage d'urgence (34) est configurée pour fournir deux points de contact de guidage d'urgence pour venir en contact avec la paroi de cylindre interne (4) uniquement dans le cas d'une destruction du piston (6), les deux points de contact de guidage d'urgence étant espacés l'un de l'autre dans une direction de l'axe central (9).

5. Ensemble de piston (44) selon l'une quelconque des revendications précédentes, dans lequel la paroi externe de guidage d'urgence (34) est au moins en partie conformée en calotte sphérique, en segment sphérique et/ou en segment de surface cylindrique.

6. Ensemble de piston (44) selon l'une quelconque des revendications précédentes, dans lequel l'élément de guidage d'urgence (30, 31) est configuré pour se fixer à l'extrémité (18, 20) de l'axe de piston (10) par un mécanisme d'encliquetage (38).

7. Ensemble de piston (44) selon l'une quelconque des revendications précédentes, dans lequel l'élément de guidage d'urgence (30, 31) est configuré pour se fixer à l'extrémité (18, 20) de l'axe de piston (10) par un mécanisme à filetage (46).

8. Ensemble de piston (44) selon l'une quelconque des revendications précédentes, dans lequel l'élément de guidage d'urgence (30, 31) est configuré pour se fixer à l'extrémité (18, 20) de l'axe de piston (10) par un mécanisme d'emmanchement à force.

9. Ensemble de piston (44) selon l'une quelconque des revendications précédentes, dans lequel l'élément de guidage d'urgence (30, 31) est constitué de laiton, d'un alliage, d'acier, d'aluminium ou d'un polyamide ; et/ou
dans lequel la paroi externe de guidage d'urgence (34) est revêtue d'un revêtement glissant.

10. Ensemble de cylindre et piston d'un moteur à combustion interne, l'ensemble de cylindre et piston comprenant :
un cylindre (2) ayant un diamètre de cylindre interne (B) et une paroi de cylindre interne (4) ; et
un ensemble de piston (44) selon l'une quelconque des revendications précédentes, dans lequel :
le premier élément de guidage d'urgence (30) est configuré pour établir une distance minimale (C) entre la première paroi externe de guidage d'urgence (34) et la paroi de cylindre interne (4) dans une plage de 0,1 % à 5 % du diamètre de cylindre interne (B) ; et
le second élément de guidage d'urgence (30) est configuré pour établir une distance minimale (C) entre la seconde paroi externe de guidage d'urgence (34) et la paroi de cylindre interne (4) dans une plage de 0,1 % à 5 % du diamètre de cylindre interne (B).
